# EUROPEAN PATENT APPLICATION

(11) **EP 0 742 433 A2**
(43) Date of publication of application: **13.11.1996**
(21) Application number: 96112286.8
(22) Date of filing: 14.01.1991
(51) Int. Cl.: G01N 23/18, G06T 7/00

(54) **A method of processing radiographic image data for detecting a defect of welding**

(30) Priority: 12.01.1990 JP 3508/90; 12.01.1990 JP 3509/90
(62) Divisional of application: 91100359.8
(71) Applicant: KAWASAKI JUKOGYO KABUSHIKI KAISHA, Chuo-ku Kobe-City (JP); THE CHUBU ELECTRIC POWER CO., INC, Nagoya-shi Aichi-ken (JP)
(72) Inventor: Matsui, Shigetomo, Higashiosaka-shi (JP); Uenishi, Masahiro, Akashi-shi (JP); Sugimoto, Kouji, Kobe-shi (JP); Iuchi, Sadao, Himeji-shi (JP); Itoga, Kouyu, Kobe-shi (JP); Harada, Tetsuzo, Akashi-shi (JP); Michiba, Kouji, Kobe-shi (JP); Onda, Katsuhiro, Nagoya-shi (JP); Okumura, Takaaki, Nagoya-shi (JP)
(74) Representative: Beetz & Partner Patentanwälte

(57) **Abstract**

A radiographic test for a welded portion of a pipe provides an image of the welded portion including a weld defect image. It is introduced into a computer, noises are removed, a region of inspection is sampled, and the welding line portion is extracted (2, 3). The defect image is emphasized. An extraction process implements an automatic judgement of the defects. Based on statistic values pixels at the end of the welding line and the peripheral portion of defect emphasized image are modified to be consistent with the result of detection by the inspector. The knowledge of an inspector about irrelevant indications is formed as a database. Feature values of defects are compared with the database, for removing irrelevant indications. Feature values of images formed as one knowledge base (A, B, C), and the knowledge of an inspector formed into another knowledge base (D, E) are formed into certain rules, the image of a welded object is collated with these rules and the type of defect is inferred.

## Description

### BACKGROUND OF THE INVENTION

This invention relates to a method of processing image data of welding, and particularly to a method of processing image data of welding in detecting a defect of welding at a welding portion of a pipe or the like in a power plant facility.

Large machines, plant facilities, etc. are made up of the organic linkage of complex mechanical devices, which involve many joint portions based on welding. These welding portions are often important sections of the facilities.

Welding portions are crucial not only for the retention of the inherent function of the machine, plant facility, etc., but also for the security of the machine and facility and of the peripheral environment. Accordingly, these joint portions are very crucial points of construction and also at the maintenance activity during the operation.

Particularly, such large-scale facilities as power plants and transformer stations, which are operated under intense requirement of security because of their public role, have their periodical and extra maintenance activities, including part replacement, inspection and tuning, carried out strictly under the raw and regulation of electric facilities. For the inspection of internal defects which cannot be done in a visual manner or by means of a surface inspection device, there is stated such a nondestructive inspection method as the X-ray transmission test in the JIS-standard and other regulation. The regulations also cover the threshold of judgement of a weld defect based on the radiographic test.

However, extremely high proficiency is required of the inspector to make a visual judgement based on his experience of the image of a weld defect provided by radiography, and yet the result of judgement is poor in reliability.

The visual inspection and judgement by a skilled inspector rely on the threshold of judgement which can differ depending on each person and can also vary due to the tiredness of vision and psychological pressure, resulting in the difficulty of stable and objective judgement.

Unless a definite judgement of inspection of weld defect is made with high reliability, a further step of maintenance activity cannot be taken, and this situation can impose a serious adverse impact on the operation of the facility in its rated ability and also on the safety of the facility.

Therefore, it is very important for a power plant enterprise to indirectly discriminate the type of held defect based on the radiography.

There are proposed means of automatic defect extraction in which a welded joint of a pipe or the like is imaged on a radiographic film and the developed image is introduced to a computer so that it is rendered a statistic process and the like and the result of process is used for the judgement by the inspector.

An example of defect extraction method is to categorize defects through the emphasis of a defect image by selective application of computational operations, the binary conversion of the emphasized image using a certain threshold, and the determination based on the density of image. This method will be called "the first method" hereinafter.

Another method publicized is based on the spacial frequency of the density distribution normal to the welding line, in which spectral components of radiographic image is fed through a band-pass filter thereby to extract the discontinuity at a defective portion and the filter output is subjected to the binary conversion based on a certain threshold thereby to make a judgement of weld defect. This method will be called "the second method" hereinafter.

A further method deals with a signal which is produced by scanning the joint in the direction normal to the welding line and the difference between the signal and its quadratic approximation is subjected to a high-frequency filtering process thereby to emphasize the radiographic image to be subjected to the maximumizing process. This method will be called "the third method" hereinafter.

A further method developed and publicized makes a quadratic curve approximation of the brightness distribution of the radiographic image taken in the direction normal to the welding line and the approximated curve is subtracted from the original curve thereby to produce an emphasized differential image, and the image is rendered the binary conversion based on the threshold value derived from the density difference, with the image being modified to clarify the boundary of binary image regions. This method will be called "the fourth method" hereinafter.

In order to infer the type of a weld defect from a radiographic image, a method is proposed for deterministicly classifying the type of the weld defect by specifying the existing range of feature values for each defect type, on the basis of feature values of the shape of the defect image obtained by the image processing of the radiography. Also, a method for inferring the type of the weld defect from the statistic distribution of the feature values by using probability. These methods will be called "the fifth method" hereinafter. Examples of this inspection system based on the Bayes' law are described in the proceeding of the fourth industrial image sensing technology symposium, pp. 51-56, entitled "WELD INSPECTION EXPERT SYSTEM WITH IMAGE PROCESSING ENVIRONMENT" by Koshimizu, et al, and in publication: Transaction of JWRI, Vol. 11, No. 2, 1982, pp. 123-132, entitled "Automatic Recognition of Weld Defects in Radiographic Test (Report 1)", by Inoue et al.

However, these conventional methods of extracting a weld defect by the inspector, although each having its inherent advantage, are lacking in the practicability as follows.

The first method involves the difficulty in selecting the operation, i.e. the selection of an operation is not possible unless the image of defect is known in advance. Since the value of pixel of the emphasized image does not have a direct physical meaning, it unfavorably necessitates the threshold setting based on try-and-error. The method suffers from high possibility of distortion of an emphasized defect image used for the judgement of defect. Despite the fact that the extracted defect image can possibly include an irrelevant indication signal, the method lacks in the processing scheme for eliminating that signal, resulting possibly in the over sensitivity of defect detection.

The second method is capable of extracting such a volumetric weld defect as a blow hole, but it suffers from extracting a defect image with a small density difference such as that of lack of fusion. Since the image of defect is discriminated based solely on the extracted density difference, the result of detection is not consistent with that of an experienced inspector having high sensitivity of detection. Therefore, it lacks in the practicability as an extraction method, and has a drawback of difficult determination of the threshold value.

The third method is deficient in that the image of defect cannot be emphasized due to a small density difference for a planar weld defect such as a lack of fusion, as in the previous method. Although the method renders the sharpness of image, it cannot eliminate the density variation at the residual weld portion, and it suffers in the inability of defect image extraction with a single threshold value. The third method by itself is not intended for the automatic extraction of a defect image.

The fourth method is incapable of extracting a defect image with a small density difference such as that of a lack of fusion. Due to its defect image extraction based solely on the density difference among pixels of emphasized image, the sensitivity of detection can differ from that of an experienced inspector. Consequently, it suffers from poor reliability and from a determination of the defect shape being inconsistent with the result provided by the inspector because its modification process is based solely on the binary-converted image.

The fifth method of the inspection judgement systems offered by Koshimizu et al and Inoue et al involves the following problems. The inspection system offered by Koshimizu et al is a determinative method based on the logical sequence, and this method categorized to be an algorithm process scheme suffers from the addition of a new judgement rule and logical treatment. Although this method is advantageous in the logical processing and metrical data processing by using graphical data of the weld defect portion and positions of density around the defective portion, the knowledge of an experienced inspector cannot be introduced or added to the expert system. The system offered by Inoue et al uses the Bayes' law, and it requires complete data collection. For example, the system needs nine feature values of defect, and it does not allow the merging with the expert system.

### SUMMARY OF THE INVENTION

An object of this invention is to provide a processing method and apparatus for automatically inferring the type of weld defect promptly and accurately from the film image of radiography of a welded portion.

A radiographic test is conducted for a welded portion of a pipe in a power plant or the like thereby to produce an image of welded portion on a radiographic film or introduce the transmitted radiation rays directly through an image intensifier. A frame of picture including an image of weld defect is introduced to a computer, in which noises are removed, an inspection area is trimmed, and the welding line portion is extracted for preprocessing. Volumetric defects of type 1 and planar defects of type 2 are rendered specific emphasizing processes. After the statistic process, the extraction process is conducted thereby to discriminate a type 1 defect or type 2 defect. Modification is conducted based on the statistic value for the pixel value at the end and peripheral portions of the welding line in the defect-emphasized image of the welding line so that the value is adjusted to be correspondent to the sensitivity of detection implemented by the inspector, thereby making the result of extraction of the defective portion consistent with that of an experienced inspector. Pixel values of the modified, emphasized image are assumed to be in the normal distribution, so that the level of an abnormal image including a defect image can be defined in terms of the standard deviation and the threshold value for the extraction of defective portion can be set easily. The knowledge of an experienced inspector for detecting an irrelevant indication is prepared as a database, and the feature value of defect related to the density and shape measured from the extracted defect candidate is compared with the database so as to remove irrelevant indication images thereby to avoid over-sensitive detection of defect images. Consequently, the ultimate result of judgement of defect is consistent with that of an experienced inspector.

A further objective of this invention is to make a database of feature value based on the image on the radiographic film or image intensifier, make a knowledge base of the inspector's experience, make a rule of defect judgement based on both databases, collect the degree of certainty of judgement through the collation of images of welded objects with the rule, and finally infer the type of defect of welding.

### BRIEF DESCRIPTION OF THE DRAWINGS

Fig. 1 is a brief flowchart of the overall processing based on the first embodiment of this invention;
Fig. 2 is a plan view showing by model the sampling area for the modification of pixel value of a differential image;
Figs. 3 and 4 are histograms of the number of pixels of certain pixel values at portions a and b in Fig. 2;
Figs. 5a and 5b are plan views showing by model the window of filtering for the emphasizing process for the type 2 defect image;
Fig. 6 is a plan view showing by model a defect candidate image before the application of the irrelevant indication removal rule after the extraction of the emphasized image;
Fig. 7 is a plan view showing by model the defect candidate image after the application of the irrelevant indication removal rule;
Figs. 8a to 8g are flowcharts of the second embodiment of this invention, of which:

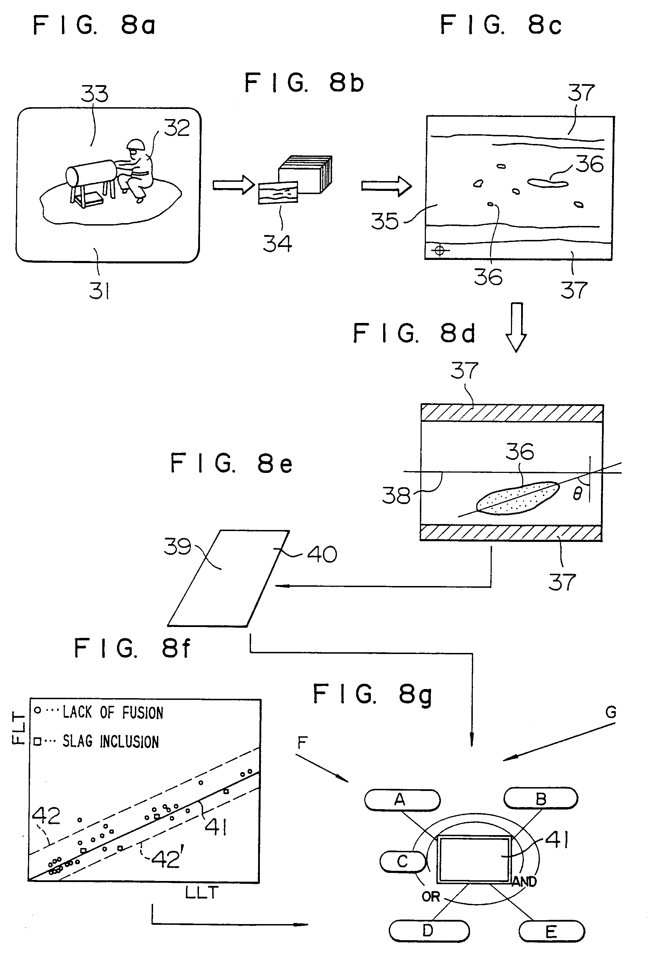

Fig. 8a is a diagram showing by model the radiography of a weld defect portion;
Fig. 8b is a perspective view of collected image films;
Fig. 8c is a plan view showing by model an image film;
Fig. 8d is a plan view of a model of image film;
Fig. 8e is a perspective view of the list of data of defect feature values;
Fig. 8f is a diagram of correlation of defect feature values; and
Fig. 8g is a diagram showing by model the estimation of the degree of certainty through the collation of the image process data of defect feature value with the user input information;

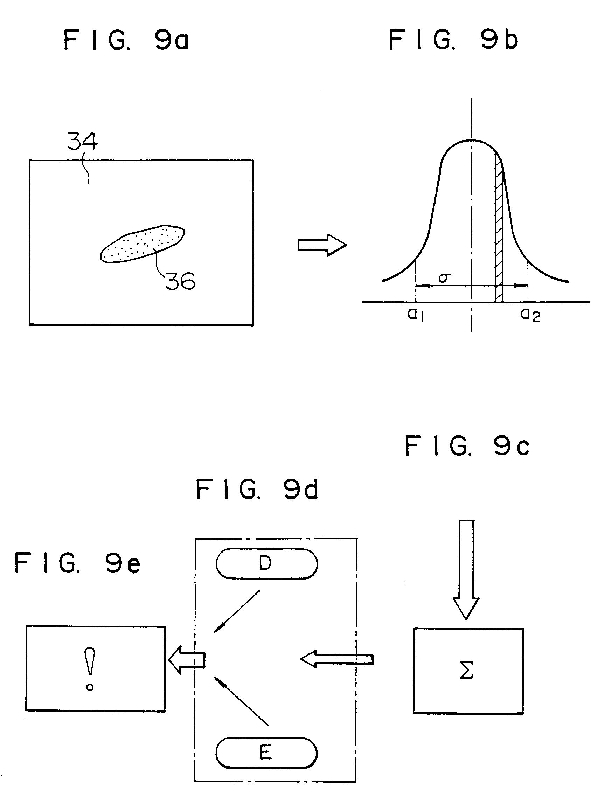

Figs. 9a to 9e are flowcharts showing by model the estimation of the degree of certainty based on the second embodiment of this invention, of which:
Fig. 9a is a diagram showing by model the image film;
Fig. 9b is a graph of standard deviation and histogram;
Fig. 9c is a diagram showing by model the accumulation of weighting factors and degrees of certainty of defect feature values with respect to the standard deviation;
Fig. 9d is a diagram showing by model the merging through the collation of the degree of certainty; and
Fig. 9e is a diagram showing by model the estimation of the total degree of certainty.

### DESCRIPTION OF THE PREFERRED EMBODIMENTS

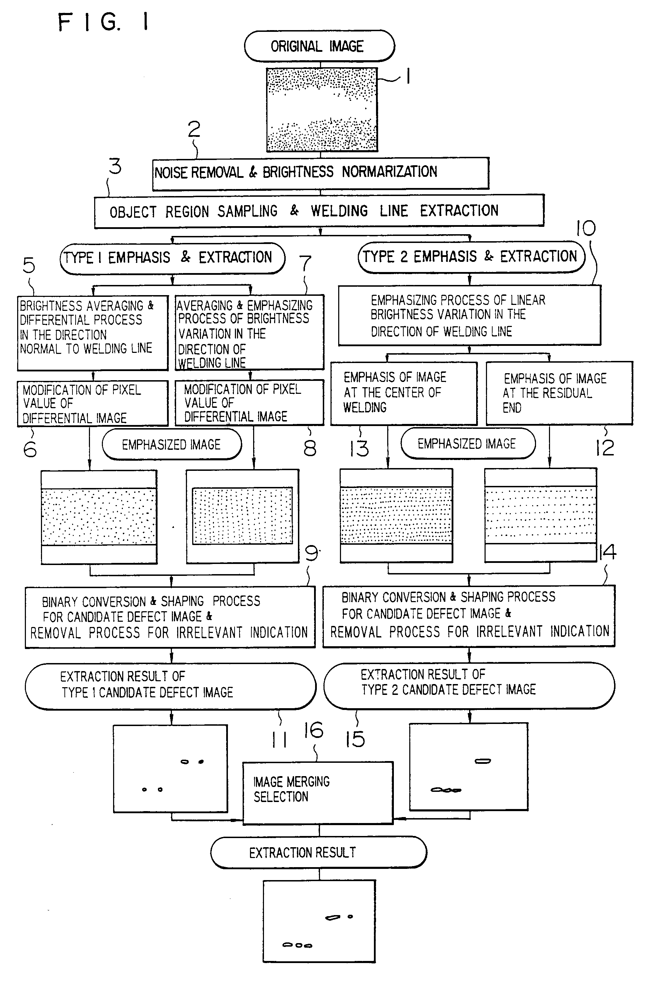

Initially, the emphasizing and extraction processes intended for the accurate and efficient judgement of a candidate defect image implemented by the inspector based on the first embodiment of this invention will be explained on the flowchart of Fig. 1.

First, a radiographic test using the X rays or the like is conducted for a certain welded portion of a pipe joint or the like in a power plant facility thereby to form an original image 1 of the welded portion on a radiographic film. The original image on the film is picked up with an ITV camera and introduced to a certain computer, by which noises in the video signal are eliminated. The reason for the removal of noises is the possible degradation of the picture quality due to noises at the introduction of the film image into the computer through the ITV camera. One of noise removal means, known as "median filter", is used. This method is to arrange small "window" areas around each point of the image and replace the point with the median of brightness of these windows. This process prevents the image from being faint due to the noise removal and enables the removal of small data variation and impulse noises in the image without a substantial loss of critical information in the peripheral section. The film image covers, in addition to the welded portion, the base metal and its exterior with the provision of a transmission meter and tone meter thereby to ensure the picture quality. The image includes a mark of literal or numeric character for the identification of the film, and this image can impose a significant influence on the statistic value of brightness distribution of the image, resulting possibly in the failure of emphasis of the defective portion. On this account, this embodiment uses means of sampling an object area by defining the area up to such images as the above-mentioned meters and marks in the vertical direction of the welding line. In this manner, the object area of judgement on the image is sampled (3) and the welding line portion is extracted (4).

A weld defect exists in the region of welding line, and conceivably there is a correlation between the frequency of occurrence of defects of one type and the position on the welding line. Accordingly, the extraction of the welding line region is very important. An image is divided horizontally into divisions with a proper width, and a binary threshold value is determined automatically based on the least square reference for each divided width. Next, the coordinates of the central point in each column of binary image is evaluated thereby to determine the center line of the welding line region by application of the method of least squares.

Emphasized extraction of a defect image having a small density difference, such as a lack of fusion, cannot be done through the sole emphasized extraction for a volumetric defect image of a weld defect portion in the image. Therefore, to deal with this matter, emphasized extraction for a defect image of type 1, i.e., such a volumetric defect image having a relatively strong contrast and having a thickness in the direction of irradiation of the radiation rays, such as the X rays, as a blow hole and slag inclusion, and a procedure based on the emphasized extraction for a defect image of type 2, i.e., such a planar (linear on the film image) defect image having a relatively weak contrast along the welding line as a lack of fusion are conducted at the same time.

The emphasized extraction for a defect image of type 1 is to have a quadratic curve approximation in the direction normal to the welding line thereby to approximate the influence of the brightness of the welding residual portion. Next, the differential process 5 for subtracting the original image from the image with the approximated brightness of the residual portion is conducted.

By this operation, only a change in brightness due to the influence of the defective portion will emerge. By using the fact that the change of brightness in the residual portion is gradual as compared with the change of defect such as a blow hole, a quadratic curve based on the method of least squares is applied to the original image to have a brightness variation, and the differential image is made as an image, with its contrast of defect being emphasized by subtracting the image with the approximated residual portion from the original image. This differential image has a uniform brightness of the background section as an emphasized image, and is displayed as an image with a dark defective portion, and it allows even an unskilled inspector to determine the defective position easily.

Next, the modification of pixel value of the differential image is conducted (process 6 in Fig. 1). The reason is that the central portion and peripheral portion of the welding line are different in brightness even for the same defect and thus an inspector has different sensitivities for brightness. In the case of the visual inspection by the inspector, a psychological adjustment of sensitivity is Predicated to take place so that the central portion and peripheral portion of the welding line are sensed in the same brightness. According to this invention, a statistic value of the brightness of the differential image is taken thereby to implement the process equivalent to the inspector's behavior so that the central portion and peripheral portion have equal sensitivity of brightness in terms of the degree of variance, and the same result as of the inspector's inspection is realized.

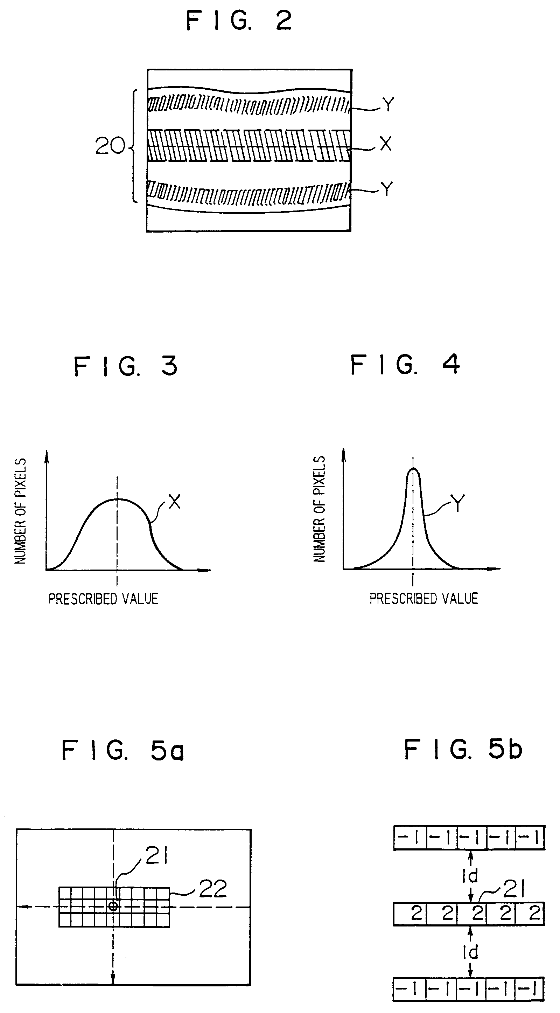

Specifically, the range of object for evaluating the statistic value of the overall image is confined to the interior of the welding line 20 as shown in Fig. 2, so that the statistic value which is unrelated to the sampling area can be evaluated without the influence of the base metal. Two regions X and Y of Fig. 2 are set so that the statistic value in the range is made controllable as a parameter of image processing.

When the statistic value of pixel value of X and Y of the differential image is taken, it is known that the standard deviation σ is larger at the central bright portion of the welding line and is smaller at the darker boundary portion next to the base metal. Namely, histograms of the number of pixels on the ordinate versus the pixel values on the abscissa for regions of X and Y in Fig. 2 are shown in Figs. 3 and 4. In the differential image, the influence of the brightness change at the residual portion is removed in advance and therefore when it is assumed that there is no defect on the welding line and particle noises distribute evenly on the film, the sensitivity of vision is predicated to be adjusted automatically by the inspector in identifying a defect so that the brightness change of the differential image is identified to some extent.

A certain logarithmic conversion for the brightness is conducted with the intention of conversion of the pixel value to the value which is proportional to the magnitude of human's visual sensitivity.

The modified pixel value of defect image is predicated to have been converted to a value which corresponds to the sensitivity of psychological sense of the inspector. Based on this fact, for the modified image, the mean value and standard deviation are evaluated for the statistic value of the brightness distribution of the overall image thereby to determine the threshold value by calculating the mean value of brightness subtracted by the standard deviation multiplied by a (where a is a parameter), and pixels having brightness smaller than or equal to the threshold value are extracted as candidates of defect (process 9 in Fig. 1). A region extracted based on this threshold value can only be an extremely dark portion of the image in some case, and the region is further shaped by expanding the region so that pixels with value of brightness smaller than or equal to the threshold value plus standard deviation divided by b (where b is a parameter) in the peripheral portion of the extraction region are included. The result of extraction in this manner is virtually identical to the result of extraction implemented by the inspector.

For the automatic extraction of candidate defects, if it is necessary to have the strict measurement of the defect shape on a test film with small variation of bead in the residual portion, the quadratic approximation for the change of brightness in the residual portion is implemented not only in the direction normal to the welding line, but also in the direction of welding line, as shown in process 7 in Fig. 1. By implementing the modification of pixel value of differential image (process of Fig. 1) equally to the modification of pixel value for the differential image in the direction normal to the welding line, the results of extraction from these two approximated images are merged as a logical sum of the binary images thereby to extract the region of candidate defect (process of Fig. 1).

By doing in this manner, it is possible to extract a defect image of type 1 accurately without the failure of detection.

Images extracted automatically in this manner include an irrelevant indication, which is not an inherent defect image or a defect other than a candidate defect, but is an irrelevant indication caused by a dark shadow or noise in contrast to a portion of sharp variation in brightness, and an irrelevant indication caused by the influence of a special image processing, and these irrelevant indications need to be removed.

The feature value of defect on the film image is measured, and the result is compared with the irrelevant indication removal rule in the irrelevant indication database which has been collected in advance by the inspector, thereby eliminating the irrelevant indication.

By doing in this manner, according to this invention, all abnormalities are extracted for the enhancement of safety factor, whereas conventionally a defect is determined based on the threshold of brightness or density, and in addition to the brightness and density, the defect feature values including the shape and the distribution of brightness and density of defect and its periphery are introduced for screening along with the database of a skilled inspector so as to enhance the accuracy of discrimination.

In parallel to the emphasizing and extraction of a volumetric defect image of type 1, the emphasizing and extraction of a defect image which is elongated in the lateral direction along the planar welding line, such as a lack of fusion of type 2, are conducted. First, the emphasizing process for the brightness change in the direction of welding line is carried out as shown by the process 10 in Fig. 1. Because of a weak contrast of the image on the film as compared with a blow hole or the like of the type-1 defect, the use of the same method as for type 1 is inconvenient in that emphasizing is not possible due to the overwhelming brightness distribution of the background.

On this account, for a defect image of type 2, its nature of elongated shape in parallel to the welding line is used to implement a filtering process which emphasizes the brightness conversion along the welding line.

As shown in Fig. 5a, a rectangular window 22 is formed for a pixel 21 in attention at the center, the mean value of brightness in the window 22 is evaluated, and the brightness of the pixel 21 in attention is replaced with the mean value thereby to improve the contrast of defect image which is elongated in the lateral direction.

Next, as shown in Fig. 5b, a weighting factor -1 is multiplied to pixels that are distant by id pixels above and below the pixel 21 in attention and a weighting factor of 2 is multiplied to the central section, and these terms are totaled. By conducting a quadratic differential computation process for the total value as the value of the pixel in attention, the brightness component of the residual portion is removed, and the defect image which is elongated in the lateral direction is emphasized.

For this differential image, emphasizing modification of the pixel value is conducted in the same manner as for a defect of type 1. First, the emphasizing modification for the image at the end of the residual portion is carried out as shown by the process 12 in Fig. 1.

The process 12 implements the modification based on the logarithmic conversion so that the standard deviation a of the residual end section (low brightness portion is equal to the standard deviation σ' of the welding center section (high brightness portion).

However, implementing such a conversion, in which the variance becomes equal through the emphasizing modification of the image at the residual end section, results in the emergence of a trend of a weakened image at the central section. For example, in the case of a lack of fusion, the contrast is relatively strong along the center line of the welding line in the region of a high brightness portion for which the statistic value is to be evaluated, or the image appears to have a large area. Accordingly, the standard deviation σ' of a high brightness portion becomes extremely greater than σ of a low brightness portion, and as a result of the process 12, the sensitivity of the high brightness portion is overwhelmed by that of the low brightness portion, resulting in the failure of emphasis for the defect image in the high brightness portion.

In this case, an image which has not been rendered the modification based on the logarithmic conversion of pixel value is used for an emphasized image at the welding center section in the process 13 of Fig. 1.

For the two emphasized images, which have been rendered the emphasizing modification in the residual end section and welding center section, the binary conversion of candidate defect image, shaping and irrelevant indication removal processes shown by the process 14 in Fig. 1 are carried out concurrently in the same manner as for the candidate defect image of type 1 described previously. By merging as a logical sum the binary images as results of extraction for these defect images of type 2, the extraction result 15 for the candidate defect image of type 2 is obtained.

Finally, merging and selection processes for the candidate defect images of type 1 and type 2 are implemented as shown by the process 16.

In the merging selection process for the candidate defect images of type 1 and type 2, the process of candidate defect image of the case where the extraction regions do not overlap is to retain all extracted regions of defect images of type 1 and to retain defect images of type 2 with the extraction region having a vertical to horizontal ratio of three or more or a length to width ratio in the inertial main axis direction of region of three or more, and to remove the remainder.

The process for a candidate defect image of the case where the extraction regions overlap is the selection based on the vertical to horizontal ratio of the extraction region, the selection based on the area, or the selection based on the distribution of brightness in the extraction region of the original image.

The foregoing irrelevant indication discrimination is summarized as listed in the following Table 1.

**Table 1**

| Object defect image | Basis of image information on defect or irrelevant indication |
|---|---|
| Candidate defect image of type 1 | o Discrimination of irrelevant indication based on the presence or absence of the density difference between the candidate image and its periphery (above, below, right, left). |
| | o Discrimination of typical defect images with strong contrast of density (e.g., blow hole). |
| | o Discrimination of irrelevant indication based on the position of candidate image (residual end section or welding line central section). |
| | o Discrimination of irrelevant indication appearing in parallel along the border line between the residual portion and base metal. |
| | o Deletion of small defects other than densed blow holes. |
| Candidate defect image of type 2 | o Discrimination of irrelevant indication based on the presence of absence of a higher density portion in the candidate image than in the peripheral portion. |
| | o Discrimination of typical defects of type 2 (e.g., lack of fusion and faulty connection) based on the length, contrast of density and linearity of candidate image. |
| | o Deletion of defects with small lengths. |

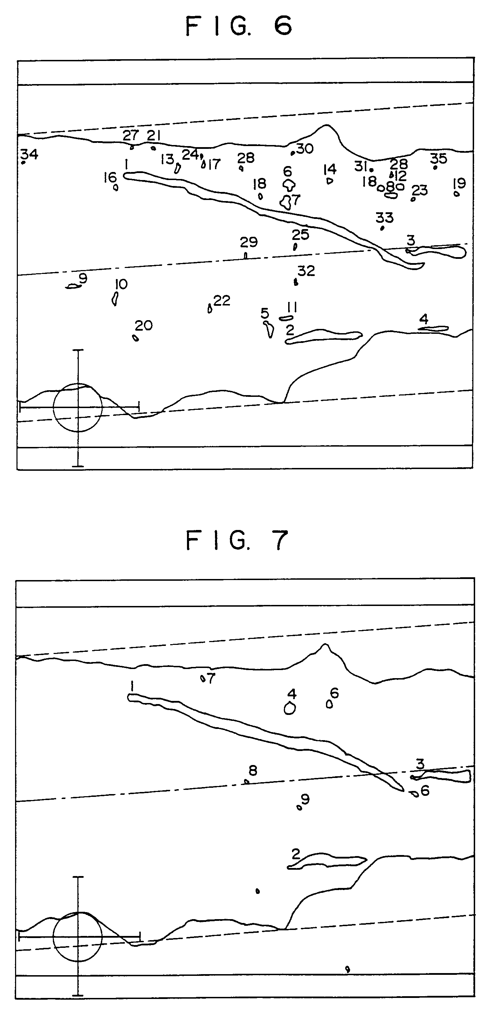

A candidate defect image before the application of the irrelevant indication removal rule shown in Table 1 to the result of extraction of a defect image which has been rendered the emphasized extraction process is shown in Fig. 6, and a candidate defect image after the application of the rule is shown in Fig. 7.

Images which undergo the image processing are not only images formed on the radiographic film, but images which are introduced directly through the image intensifier can also be applicable, as mentioned previously.

According to the first embodiment of this invention, for the radiographic test using the X rays or the like for such a weld defect as a blow hole and lack of fusion emerging in the welded portion or the like of a pipe or the like of a power plant facility, it is possible to extract a defective portion automatically and measure the shape and size of the defect automatically thereby to speed up the inspection and enhance the stability of the judgement result. In addition, the result of extraction is consistent with the result of the inspector. Setting of the threshold value of extraction is easy, and over sensitivity detection of defect images caused by the irrelevant indication removal process can be prevented.

Through the assumption of the distribution of pixel values of modified, emphasized images to be the normal distribution, the level of a candidate defect image including a defect image in the image can be defined in terms of the deviation value, whereby setting of the threshold value at the extraction of defect image is made easy.

Moreover, by measuring the feature value of defect related to the density and shape of an extracted candidate defect image, and by setting in advance the range of feature value of defect image which can be judged to be irrelevant indication by a skilled inspector so that irrelevant indication images are removed thoroughly by comparison, whereby over sensitive detection of defect images can be prevented and the efficiency of inspection can be enhanced.

By conducting the image emphasizing process for a volumetric defect image of type 1 and the image emphasizing process for a planar defect images of type 2 for the same image, it is possible to eliminate the failure of emphasis of defect images.

Moreover, an emphasized image converted into binary through the calculation of statistic value of pixel values of modified, emphasized image and subtraction of the threshold value multiplied by a certain parameter of the standard deviation from the mean value so that part of the candidate defect image can be extracted is conceivable to have a virtual normal distribution, and therefore the above-mentioned value of multiple of the standard deviation can be set easily by adjustment in the manner of probability.

For the emphasized image and original image adjacent to the extracted part mentioned above, pixels having lower values than their periphery are merged and thereafter the border line is smoothed, whereby it is possible to extract the shape of defect image which is consistent with the result of recognition of the image which has been inferred conventionally by the human inference, i.e., the inference by the inspector or the like having abundant experience.

Based on the capability of the active use of the knowledge of the inspector in making the judgement of an irrelevant indication in the abnormal image among images in advance, over sensitive detection of defect images can be prevented.

Next, the second embodiment of this invention will be explained. As shown in Fig. 8g, the method of inferring the type of weld defect based on the second embodiment of this invention is as follows. Measured data for a welded portion obtained from the image on the radiographic film, the degree of certainty of rules A, B and C of the knowledge base based on the feature value of weld defect derived from the data, and the rule of user input information D and E which can be obtained by experience by only one of the welding worker and inspector are subjected to collation thereby to obtain the total degree of certainty. Using the degree of certainty, it will become possible to determine a weld defect to be a lack of fusion, or to infer the certainty of such a defect as a slag inclusion, for example. For the above-mentioned user input information D and E, the welding condition which can be known only by the welding worker, e.g., the welding attitude such as up-face welding or down-face welding, the magnitude of welding current, the slag of welding bead, the state of scale, the type of tip-open welding, etc. are added with the degree of certainty based on the experience of the welding worker thereby to make a certain rule in advance. As shown in Fig. 8g, the degree of certainty of the feature value of defect based on the measurement of image of a weld defect portion (F) and the above-mentioned user input information (G) are collated in a total sense, which is used together with the total degree of certainty based on the parallel comparison with each rule, and the inferrence of the type of weld defect is made.

The feature value of welding is obtained through the complicated procedure, and a specific procedure of rule generation is as follows.

As shown in Fig. 8a, at the site 31 of a piping facility or the like in a power plant, an inspector 32 takes a radiographic film picture of a weld defect in a welded portion of the pipe or the like by means of a radiographic inspection device 33 using the X rays or the like. As shown in Fig. 8b, a resulting image film 34 is developed through a certain treatment. As shown in Fig. 8c, it is checked that a weld defect portion (including candidates of defect) 36, which appears in the image at a bead section 45 of the image film 34, exists between base metals 37, and direct measurement of the weld defect portion 36 on the image film 34 is conducted thereby to get input information on the feature value of defect as shown in the following Table 2.

**Table 2**

| | | | |
|---|---|---|---|
| 1 | Flatness | (FLT) | 1.564 |
| 2 | Symmetry | (SYM) | 0.796 |
| 3 | Unsharpness | (USP) | 0.481 |
| 4 | Direction of major axis | (ANG) | 3.340 |
| 5 | Position | (PST) | 0.156 |
| 6 | Average density | (DME) | 0.005 |
| 7 | Density distribution | (DSG) | 0.004 |
| 8 | Major span | (LLT) | 9.319 |
| 9 | Minor span | (SLN) | 0.769 |
| 10 | Nonlinearity | (NOL) | 0.069 |

Data of the average density of item 6 through the nonlinearity of item 10 are features in this invention. The welding center line 38, defect image 36, angle θ and the like for the bead 35 between the base metals 37 on the image film 34 are schematically shown in Figs. 8c and 8d. From the film image as shown in Fig. 8c and Fig. 8d, data of feature value of weld defect based on the measured data is prepared in advance as shown by the Table 2 in a memory unit 40 shown in Fig. 8e. Fig. 8e shows the feature value of weld defect of the data in Table 2.

For the feature value of weld defect based on the data which has been measured by an instrument directly from the film image as shown in Fig. 2, there is a specific relationship among certain feature values of weld defect as it is apparent from the experience. For example, as shown in Fig. 8f, in which the length of defect (LLT) mm is plotted on the horizontal axis and the flatness (FLT) is plotted on the vertical axis, there is a linear relationship of $\text{FLT = 1/3 LLT}$, and a specific distribution relation of lack of fusion portions marked by circles and slag inclusion marked by squares in distribution above and below the line is obtained. Accordingly, through the arrangement of data of Table 2 for the relation between the defect length (LLT) and flatness (FLT), an identification rule of a sort of knowledge base is created. In the embodiment shown in Fig. 8f, it is determined in advance that if the data relation meet the conditions: $\text{1/3 LLT -0.2 < FLT < 1/8 LLT + 0.3}$, and LLT < 12, then inference is made that the weld defect is a lack of fusion or it is a slag inclusion at a degree of certainty of 0.95 based on the identification rule.

As a method of providing a degree of certainty in this case, the probability for the number of all data may be used.

Needless to say, the foregoing embodiment is an example of the identification rule as a knowledge base of the feature value of weld defect for the weld defect portion 36, and for a certain relation of other feature value of weld defect, a respective identification rule of knowledge base is available, and a certain number of these rules are set in parallel.

The identification rule F obtained as a knowledge base and the feature value 39 of weld defect, and the user input information G and user input information D and E are collated for each rule in a general manner, as shown in Fig. 8g. In case these individual degrees of certainty are examined and a specific degree of certainty is adopted on a priority basis, the type of defect and the cause of defect of a certain weld defect portion are inferred with the estimation of predetermined certainty based on the adopted degree of certainty. Otherwise, a total degree of certainty is evaluated based on a certain calculation method for the degree of certainty, and the certainty of the type and cause of the weld defect portion is presented as a composite degree of certainty.

Another form of estimation of the degree of certainty based on the identification rule of knowledge base using data processing of feature value of defect for the defective portion on the radiographic image film is as shown in Fig. 9a to Fig. 9e.

There is rule generation based on data processing as shown in Fig. 9a to Fig. 9c. As shown in Fig. 9a, the feature values of defect as shown in Table 2 are evaluated in advance for the defective portion 36 of the film image 34. The database of histogram for each feature value is provided in advance as shown in Fig. 9b, and the feature value is collated with the database to determine the range of standard deviations 1σ, 2σ or 3σ. For example, in the case of a blow hole, as shown in Fig. 9b, weighting factors of 1.0, 0.6 and 0.1 are given to the deviations σ, 2σ and 3σ of a feature value, respectively, and the weighting factors are selected to be 1.0, 0.6 and 0.1 as the degree of certainties for the flatness, density and weld defect length, respectively, as shown in the following Table 3. (Accordingly, the weighting factors and degrees of certainty differ depending on the experience of inspectors and the like, and therefore it is desirable to have the estimation of weighting factors and degrees of certainty provided by an inspector who has abundant skillness.)

**Table 3**

| | σ | 2σ | 3σ | Certainty of results |
|---|---|---|---|---|
| Weighting factor | 1.0 | 0.6 | 0.1 | |
| Flatness | ○ | | | 1.0 |
| Density | | ○ | | 0.6 |
| Length of defect | | | ○ | 0.1 |

Calculation of degree of certainty based on the weighting factor is conducted for each feature value of defect, and by merging the result with the degree of certainty of the user input information, the ultimate degree of certainty is determined in the same manner as described previously.

Needless to say, there are forms of knowledge base construction other than the second embodiment.

Needless to say, for the user input information, such procedure as obtaining the degree of certainty in advance should be taken through the interview or the like with the welding worker and welding inspector.

Through the collation of the parallel set of identification rules of knowledge base, the type and cause of a weld defect is expressed in such a rule system of "if ... then ..., and the degree of certainty is ...", thereby estimating the inference of certainty in a sense of fuzzy theory by avoiding the assertion of the type and cause in a sense of determinative theory.

Needless to say, in the case of a plurality of degrees of certainty as a result of collation for a plurality of identification rules, as mentioned previously, a final, total degree of certainty is estimated based on a certain calculation method of the degree of certainty.

The procedure is shown in Figs. 9c, 9d and 9e.

Embodiments of this invention are not limited to the radiography of the image of a welded portion on the film, but, needless to say, the image may be introduced as a direct digital image through the image intensifier, or displayed on the CRT.

According to the second embodiment of this invention, the certainty which is not obtained by the conventional method is inferred and the error made by the determinative method can be avoided, whereby the degree of certainty which is closed to the inference of the type and cause of a practical defective portion implemented by an extremely expertized inspector can be estimated. In addition, it is very easy to add a new rule or alter a rule, complete supplement for the collected data is not needed, and inference based on data which can be collected is made possible.

By including ten kinds of feature values of defect and the user input information provided by a skilled inspector derived from the image information as shown in Table 2 in addition to the dimensions and complexity of the graphical feature value of defect and the density and position of its periphery, inference of very closed approximation to the inference by an experienced inspector can be attained. Also, it provides the flexibility of replacing the degree of certainty based on the statistic process of the feature value and the value of variance derived from data which can be obtained in the reality.

Furthermore, in some cases, there is another flexibility of the capability of including information other than information on the feature value of defect.

## Claims

1. A method of inferring the type of a weld defect based on the process of data of a plurality of feature values of defect provided by the measurement of a weld defect at a welded portion appearing on a radiographic image (34), wherein:
a certain number of defect inference rules (A, B, C) are formed in advance as a knowledge base for each type of weld defect;
data of the feature value of a weld defect is processed and collated with each of said defect inference rules;
a degree of certainty corresponding to the processed data which satisfies said defect inference rule is estimated; and
the type of the weld defect is inferred in a sense of probability based on said degree of certainty.

2. A weld defect inference method according to claim 1, wherein the mutual relation of said defect feature values are formed into a rule quantitatively.

3. Weld defect inference method according to claim 1 or 2, wherein said defect feature value is compared with frequency distributions of each type of defect based on known data thereby to obtain the range of deviation and estimate the degree of certainty.

4. A method of inferring a weld defect, characterized in that:
a plurality of feature values of defect provided by the measurement of weld defects at a welded portion appearing on a radiographic image are formed into data;
a certain number of defect inference rules are formed in advance as a knowledge base for each type of weld defect through the process of said data;
data of defect feature value of the weld defect is processed and is collated with said defect inference rules in conjunction with user input information on said welding possessed by only one of welding worker and inspector;
the degree of certainty corresponding to processed data which satisfies said defect inference rules is estimated; and
the type of the weld defect is inferred in a sense of probability based on said degree of certainty.

5. Apparatus for carrying out the method according to claims 1-4.
